(19) Europäisches Patentamt
European Patent Office
Office européen des brevets

(11) **EP 2 746 733 B1**

(12) **FASCICULE DE BREVET EUROPEEN**

(45) Date de publication et mention
de la délivrance du brevet:
**29.05.2019 Bulletin 2019/22**

(51) Int Cl.:
*G01F 11/28* (2006.01)  *G01F 11/08* (2006.01)
*G01F 11/04* (2006.01)  *B05B 11/04* (2006.01)
*B05B 11/02* (2006.01)

(21) Numéro de dépôt: **14157367.5**

(22) Date de dépôt: **04.11.2009**

(54) **DISPOSITIF DOSEUR A PRESSION DIFFERENTIELLE**

Dosiervorrichtung mit Differenzialdruck

Metering device with differential pressure

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **05.11.2008 FR 0806164**

(43) Date de publication de la demande:
**25.06.2014 Bulletin 2014/26**

(62) Numéro(s) de document de la (des) demande(s)
initiale(s) en application de l'article 76 CBE:
**09784338.7 / 2 342 542**

(73) Titulaire: **Flexidose**
**77690 Montigny-sur-Loing (FR)**

(72) Inventeur: **Wozna, Patrick**
**77690 MONTIGNY-SUR-LOING (FR)**

(74) Mandataire: **Ahner, Philippe**
**BREVALEX**
**95, rue d'Amsterdam**
**75378 Paris Cedex 8 (FR)**

(56) Documents cités:
**WO-A1-00/37179**   **WO-A1-99/06802**
**US-A- 4 049 162**   **US-B1- 6 662 973**

## Description

La présente invention concerne la réalisation des dispositifs permettant le dosage de fluides liquides ou pâteux, tels notamment que les fluides cosmétiques, alimentaires ou de nettoyage, ces fluides étant le plus souvent contenus dans un flacon souple et délivrés en doses calibrées chaque fois qu'un utilisateur presse ce flacon.

Plus précisément, l'invention concerne un dispositif doseur pour transférer, depuis un espace amont vers un espace aval, un volume prédéterminé de fluide liquide ou pâteux en réponse à une élévation de pression de ce fluide dans l'espace amont, ce dispositif comprenant au moins un corps creux et un obturateur, le corps creux délimitant au moins partiellement une chambre dotée d'une entrée et d'une sortie, l'obturateur étant mobile par rapport au corps creux entre une position de repos, vers laquelle cet obturateur est sollicité par une force de rappel, et une position extrême, qui est distante de la position de repos et vers laquelle cet obturateur est sélectivement sollicité par le fluide circulant de l'espace amont vers l'espace aval, l'espace amont s'étendant au moins à l'extérieur de la chambre du côté de son entrée, et l'espace aval s'étendant au moins à l'extérieur du dispositif et de la chambre du côté de sa sortie.

La demande internationale WO99/06802 divulgue un ensemble comportant un contenant souple dans lequel il est possible de stocker un liquide, et un dispositif de dosage relié audit contenant. Ledit dispositif de dosage comporte une chambre de remplissage et au moins un système de conduite d'alimentation disposé à l'intérieur de la chambre de remplissage. Ce système de conduite d'alimentation comporte un orifice pour écoulement sortant, disposé dans la chambre de remplissage, de sorte qu'il est possible de remplir ladite chambre avec le liquide stocké dans le contenant en pressant ce dernier. L'ensemble est fait pour être utilisé avec ledit dispositif de dosage situé au-dessus du contenant. Ledit dispositif de dosage comporte en outre un obturateur flottable qui, dans sa position de repos est soumis à la gravité et dans sa position extrême, lorsque la chambre est remplie, est soumis à la flottabilité et clôt la chambre au niveau d'un siège d'étanchéité situé dans la partie haute de ladite chambre.

Un dispositif de ce type est par exemple connu du document de brevet EP 0 995 976 intitulé "Embout doseur et récipient équipé d'un embout doseur selon l'invention". Le dispositif décrit dans ce document possède un grand nombre de pièces moulées ou soufflées, dont les tolérances de fabrication et d'assemblage sont très faibles. De plus, la conception de ce dispositif impose un guidage de l'obturateur, appelé "piston doseur", à la fois sur son diamètre intérieur et sur son diamètre extérieur, ce qui a pour effet d'engendrer des forces de frottement élevées.

Le brevet US 4,582,230, intitulé "Metering Device", décrit lui aussi un doseur de fluide, ce doseur mettant en oeuvre un sas d'un volume correspondant à la dose unitaire. L'ouverture de sortie du doseur est sélectivement obstruée par un piston relié par une tige cylindrique à une boule contrôlant l'ouverture du sas, du côté de l'espace amont délimité par une bouteille. Lorsque la bouteille est tenue en position verticale, le piston ferme le verseur du doseur. Lorsque la bouteille est en cours de renversement, le piston continue à maintenir la fermeture du verseur, alors que le liquide entre dans le sas. Une fois la bouteille en position verticale, la boule ferme l'entrée du sas, alors que le piston est descendu, ouvrant le verseur et libérant le liquide contenu dans le sas.

Outre le fait que cette solution requiert également la mise en oeuvre de nombreuses pièces, le résultat recherché ne peut être obtenu que par un lent retournement de la bouteille, afin que le réservoir se remplisse avant que la boule ne vienne fermer l'entrée du liquide dans le réservoir, et avant que le piston ne libère le liquide contenu dans le réservoir. Par ailleurs un tel dispositif n'est pas adapté au dosage des fluides visqueux.

Dans ce contexte, la présente invention a pour but de proposer un dispositif de dosage comme défini dans la revendication 1.

D'autres caractéristiques et avantages de l'invention ressortiront clairement de la description qui en est faite ci-après, à titre indicatif et nullement limitatif, en référence à plusieurs modes de réalisation et exemples illustrés aux dessins annexés, dans lesquels :

- la figure 1 est une vue en coupe axiale représentant un mode de réalisation de l'invention dans lequel l'obturateur est constitué par un flotteur sphérique;
- la figure 2 est une vue en coupe axiale représentant un mode de réalisation de l'invention dans lequel l'obturateur est constitué par un flotteur cylindrique à tête tronconique;
- la figure 3a est une vue en coupe axiale représentant un mode de réalisation de l'invention dans lequel l'obturateur est constitué par un flotteur sollicité vers sa position de repos par un ressort;
- la figure 3b une vue du dessus d'un obturateur utilisable dans le mode de réalisation particulier constituant une variante de la figure 3a;
- la figure 4 est une vue en coupe axiale représentant un exemple ne faisant pas partie de l'invention dans lequel l'obturateur est constitué par un flotteur maintenu dans sa position de repos par une languette semi-rigide;
- la figure 5a est une vue en coupe axiale représentant un mode de réalisation de l'invention dans lequel la sortie de la chambre est constituée par un orifice d'écoulement cruciforme;
- la figure 5b est une vue de face de la sortie de la chambre cruciforme illustrée à la figure 5a;
- la figure 6a est une vue en coupe axiale représentant un exemple ne faisant pas partie de l'invention dans lequel l'obturateur est constitué par un diaphragme illustré dans sa position de repos;

- la figure 6b est une vue latérale en élévation de l'exemple illustré à la figure 6a;
- la figure 6c est une autre vue en coupe axiale de l'exemple illustré à la figure 6a, dans lequel l'obturateur est représenté dans sa position extrême;
- la figure 6d est une vue de dessus de l'exemple illustré en pointillés dans sa position de repos et en trait plein dans une position intermédiaire;
- la figure 7b est une vue en coupe axiale de l'exemple illustré à la figure 7a, dans lequel l'obturateur est représenté dans sa position extrême;
- la figure 8a est une vue en coupe axiale représentant un exemple ne faisant pas partie de l'invention dans lequel l'obturateur est constitué par un diaphragme illustré dans sa position de repos, et dans lequel la chambre est fermée par le diaphragme associé à un piston et présente un volume variable, cette chambre étant représentée avec son volume maximal;
- la figure 8b est une vue en coupe axiale de l'exemple illustré à la figure 8a et observé dans un état transitoire postérieur à celui qu'illustre la figure 8a, l'obturateur étant représenté dans sa position extrême et la chambre étant toujours représentée avec son volume maximal;
- la figure 8c est une vue en coupe axiale de l'exemple illustré aux figures 8a et 8b et observé dans un état transitoire postérieur à celui qu'illustre la figure 8b, l'obturateur étant toujours représenté dans sa position extrême, et la chambre étant représentée avec son volume minimal;
- la figure 8d est une vue en coupe axiale de l'exemple illustré aux figures 8a à 8c et observé dans un état transitoire postérieur à celui qu'illustre la figure 8c, l'obturateur étant à nouveau représenté dans sa position de repos, alors que la chambre est toujours représentée avec son volume minimal;
- la figure 8e est une vue en coupe axiale de l'exemple illustré aux figures 8a à 8d et observé dans un état stable postérieur à celui qu'illustre la figure 8d et identique à l'état initial illustré à la figure 8a, l'obturateur étant retourné à sa position de repos, et la chambre ayant repris son volume maximal;
- la figure 8f est une vue de dessus de l'exemple illustré à la figure 8e;
- la figure 9a est une vue en coupe axiale représentant un exemple ne faisant pas partie de l'invention dans lequel l'obturateur est constitué par un double volet illustré dans sa position extrême, et dans lequel la chambre est fermée par ce double volet associé à un piston, cette chambre présentant un volume variable et étant représentée avec son volume minimal;
- la figure 9b est une vue en coupe axiale de l'exemple illustré à la figure 9a et observé dans un état initial stable, l'obturateur étant représenté dans sa position de repos, et la chambre étant représentée avec son volume maximal;
- la figure 9c est une vue latérale du piston et de l'obturateur de l'exemple illustré aux figures 9a et 9b, l'obturateur étant représenté en trait plein dans sa position de repos, et, en pointillés, dans une position intermédiaire et dans sa position extrême;
- la figure 9d est une vue de dessus du piston et de l'obturateur de l'exemple illustré aux figures 9a à 9c, le piston et l'obturateur étant représentés dans deux des positions qu'ils occupent sur la figure 9c;
- la figure 10a est une vue en coupe axiale représentant un exemple ne faisant pas partie de l'invention dans lequel l'obturateur est constitué par un volet simple illustré dans sa position de repos, et dans lequel la chambre est fermée par ce volet associé à un piston, cette chambre présentant un volume variable et étant représentée avec son volume maximal;
- la figure 10b est une vue de dessus du piston et de l'obturateur de l'exemple illustré à la figure 10a, le piston et l'obturateur étant représentés dans la position qu'ils occupent sur cette figure 10a;
- la figure 10c est une vue en coupe axiale de l'exemple illustré aux figures 10a et 10b, l'obturateur étant représenté dans sa position extrême, et la chambre étant représentée avec son volume minimal; et
- la figure 10d est une vue de dessus du piston et de l'obturateur de l'exemple illustré aux figures 10a à 10c, le piston et l'obturateur étant représentés dans la position qu'ils occupent sur la figure 10c.

Comme annoncé précédemment, l'invention concerne un dispositif doseur permettant de transférer, depuis un espace amont E1 vers un espace aval E2, un volume prédéterminé de fluide liquide ou pâteux en réponse à une élévation de pression de ce fluide dans l'espace amont E1.

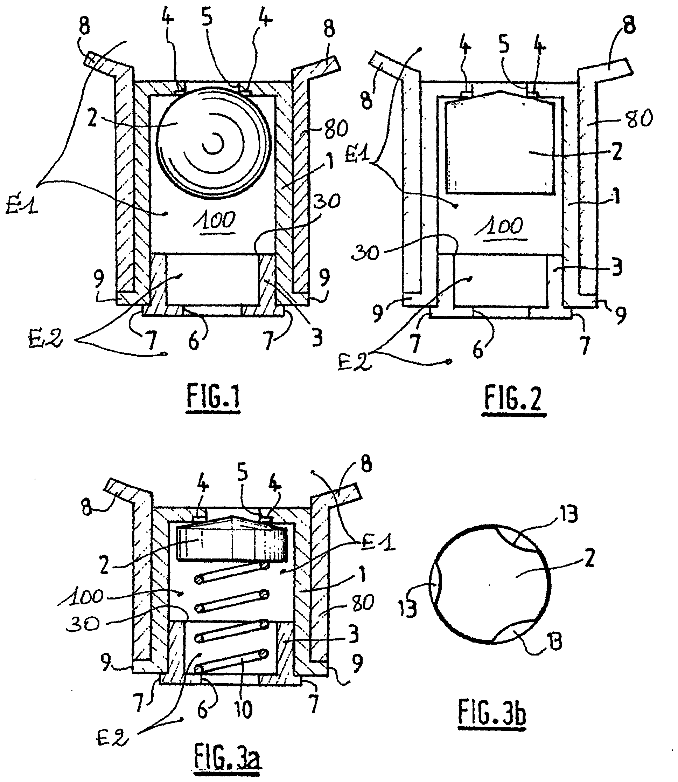

Comme le montrent notamment les figures 1 à 3a, 4, 6a, 7a, 8a, 9b et 10a, ce dispositif comprend au moins un corps creux 1 et un obturateur 2.

Dans sa forme la plus complète, le dispositif de l'invention comprend en outre un récipient 8 (représenté de façon seulement partielle sur les figures) propre à contenir le fluide à distribuer, et doté d'un goulot 80 constituant le seul exutoire du fluide.

Le volume interne délimité par ce récipient, qui constitue au moins partiellement l'espace amont E1, présente une capacité variable.

A cette fin, le récipient peut par exemple comporter une paroi souple et élastiquement déformable, de sorte qu'une pression exercée sur cette paroi par un utilisateur provoque une réduction transitoire du volume de l'espace amont E1 et une élévation concomitante de la pression du fluide contenu dans le récipient.

En variante, le récipient peut n'être formé que de parois rigides, mais comporter un piston actionnable par l'utilisateur pour provoquer une réduction transitoire du volume de l'espace amont E1 et une élévation concomitante de la pression du fluide contenu dans ce récipient.

Le corps creux 1 est disposé de façon étanche dans le goulot 80 de ce récipient 8. En particulier, le corps creux 1 peut être inséré à force dans le goulot 80 jusqu'à ce qu'une butée 9 du corps creux vienne en appui sur ce goulot.

Le corps creux 1, de forme par exemple essentiellement cylindrique, délimite au moins partiellement une chambre 100 dotée d'une entrée 5 et d'une sortie 6.

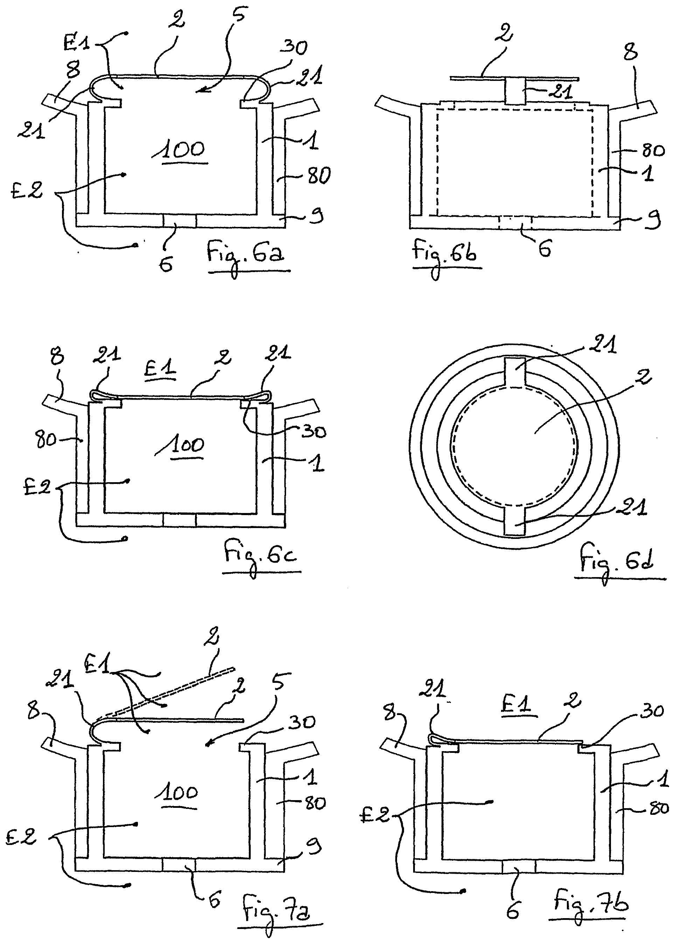

L'obturateur 2 est mobile par rapport au corps creux 1 entre une position de repos par exemple illustrée aux figures 1, 2, 3a, 4, 6a, 6b, 7a (en pointillés), 8a, 8e, 9b et 10a, et une position extrême par exemple illustrée aux figures 6c, 7b, 8b, 8c, 9a et 10c, qui est distante de la position de repos.

L'obturateur 2 est sollicité vers sa position de repos par une force de rappel, et sollicité vers sa position extrême, lors de l'application d'une pression différentielle entre l'entrée 5 de la chambre et la sortie 6 de cette chambre, par le fluide circulant de l'espace amont E1 vers l'espace aval E2, l'espace amont E1 s'étendant au moins à l'extérieur de la chambre 100 du côté de son entrée 5, et l'espace aval E2 s'étendant au moins à l'extérieur du dispositif et de la chambre 100 du côté de sa sortie 6.

Dans sa position classique de repos, le récipient ou flacon 8 est posé verticalement de manière que son goulot 80 soit tourné vers le bas, le fluide à distribuer ayant donc spontanément tendance à s'écouler par gravité de l'espace amont E1 vers l'espace aval E2, et de l'entrée 5 de la chambre 100 vers la sortie 6 de cette chambre.

Selon l'invention, l'obturateur 2 isole l'un de l'autre l'espace amont E1 et l'espace aval E2 dans sa position extrême, et seulement dans cette position.

Par ailleurs, la sortie 6 de la chambre 100 communique avec l'espace amont E1 pour toute position de l'obturateur 2 autre que sa position extrême.

Comme le montrent notamment les figures 1 , 2, 3a, 4, 5a, 6a, 6c, 7a, 7b, 8a, 8b, 10a et 10c, l'obturateur 2 peut par exemple remplir sa fonction en coopérant avec un siège d'étanchéité 30 qui entoure un passage de fluide disposé entre l'espace amont E1 et l'espace aval E2, et sur lequel cet obturateur 2 s'appuie dans sa position extrême.

En outre, comme le montrent les figures 1, 2, 3a, 8a à 8e, 9a, 9b, 10a et 10c, le dispositif de l'invention peut comprendre un bouchon 3 inséré dans le corps creux 1, ce bouchon étant percé d'un orifice d'écoulement formant la sortie 6 de la chambre 100.

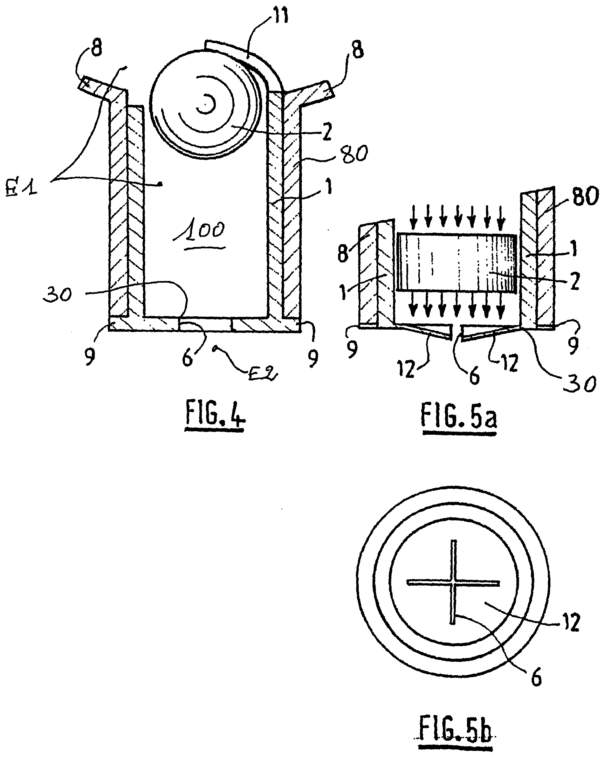

Les figures 1, 3a, 3b, 5a et 5b illustrent des modes de réalisation de l'invention et la figure 4 illustre un exemple ne faisant pas partie de l'invention, dans lesquels l'obturateur 2 présente une masse volumique moyenne inférieure à celle du fluide à distribuer, et typiquement une densité inférieure à un.

Dans ce cas, l'obturateur 2, lorsqu'il baigne dans le fluide à distribuer, se comporte comme un flotteur, de sorte que la force de rappel qui sollicite cet obturateur vers sa position de repos est au moins partiellement constituée par la force d'Archimède qui s'exerce sur lui.

Dans la suite de la présente description des modes de réalisation des figures 1 à 5b, les mots "haut" et "bas" seront, pour qualifier des directions ou des positions relatives, utilisés dans leur acception commune, c'est-à-dire en référence au sens d'application de la gravité terrestre, et donc respectivement à une altitude plus élevée et à une altitude moins élevée par rapport au niveau du sol.

En outre, le récipient ou flacon 8 sera considéré comme étant orienté de façon que son goulot 80 soit tourné vers le bas.

Dans le premier mode de réalisation détaillé illustré à la figure 1, le corps creux 1, par exemple de forme cylindrique et réalisé en matière plastique, contient, en tant qu'obturateur 2, un flotteur creux et sphérique.

Ce corps creux 1 est inséré à force dans le goulot 80 du récipient 8 contenant le fluide à doser jusqu'à ce qu'une butée 9 de ce corps 1 vienne en contact contre ce goulot.

Par ailleurs, un bouchon 3 est inséré à force dans la partie basse du corps creux 1 jusqu'à ce qu'une butée 7 de ce bouchon 3 vienne en contact contre ce corps 1.

L'entrée 5 de la chambre 100 prend la forme d'un orifice ménagé dans le corps creux 1, et la sortie 6 de la chambre 100 prend la forme d'un orifice ménagé dans le bouchon 3.

La taille et / ou la forme de la sortie de la chambre 6 du fluide peuvent ainsi être modifiées à volonté en remplaçant le bouchon 3 inséré dans le goulot 80 par un autre bouchon 3 possédant un orifice d'écoulement 6 de taille et / ou de forme différente.

Deux rainures 4, par exemple conformées en U à et disposées à 90° les unes des autres, sont pratiquées dans la partie haute du corps creux 1 afin d'éviter au flotteur 2 d'obturer de manière étanche l'orifice 5 d'entrée de la chambre 100, qui est situé dans la partie supérieure du corps creux 1.

Le bord de la partie évidée du bouchon 3 forme un siège d'étanchéité 30 permettant au flotteur 2, lorsqu'il vient en appui sur ce siège 30 dans sa position extrême sous l'effet d'une élévation de la pression du fluide dans l'espace amont E1, d'isoler cet espace amont E1 de l'espace aval E2, et d'interrompre l'écoulement du fluide à travers l'orifice calibré 6 de sortie de la chambre 100.

Le jeu annulaire entre le corps creux 1 et le flotteur 2 est dimensionné de manière à permettre un écoulement par gravité du fluide sous le flotteur 2. Ainsi, dès que la pression du fluide dans l'espace amont E1 est relâchée, autorisant le fluide à s'écouler à nouveau sous le flotteur 2, ce flotteur est soumis, en raison de sa masse volumique inférieure à celle du fluide, à une force d'Archimède qui rappelle le flotteur 2 au contact de la partie haute du corps creux 1, c'est-à-dire dans sa position de repos illustrée à la figure 1.

Pour faire apparaître, au sein du fluide à distribuer, la pression différentielle nécessaire du déplacement du flotteur 2, il convient de prévoir que la section de passage de l'orifice 6 de sortie de la chambre 100 soit supérieure à la section de passage offerte par le jeu annulaire entre le flotteur 2 et le corps creux 1.

Lorsqu'une pression est exercée sur le flacon souple 8 pour expulser le fluide contenu dans l'espace amont E1, le flotteur 2 est sollicité par le fluide en mouvement vers le bas du corps creux 1, pendant que la majorité du fluide contenu dans la chambre 100 entre le flotteur 2 et le bouchon 3 traverse l'orifice 6 de sortie de la chambre. Puis, le flotteur 2 vient en butée contre le bouchon sur le siège d'étanchéité 30 qu'il obture, interdisant l'expulsion supplémentaire de fluide. Le relâchement ultérieur de la pression sur le flacon 8 et donc dans l'espace amont E1 crée une dépression qui, par un léger soulèvement du flotteur, fait rentrer de l'air dans la chambre 100.

Le flacon souple 8 peut ainsi revenir à sa position de repos, et le fluide, qui s'écoule par gravité dans le corps creux 1, remonte progressivement le flotteur 2 en position haute vers sa position de repos, par l'action de la poussée d'Archimède.

La figure 2 illustre un mode de réalisation de l'invention qui ne se distingue du mode de réalisation de la figure 1 que par le fait que l'obturateur 2 prend la forme d'un flotteur 2 cylindrique doté d'une partie supérieure tronconique au lieu de prendre la forme d'un flotteur sphérique. Dans la mesure où, pour un même encombrement dans la chambre 100, ce flotteur cylindrique à tête tronconique présente un volume plus important que le flotteur sphérique, le mode de réalisation de la figure 2 est plus particulièrement adapté au dosage des fluides de faible masse volumique.

Dans le troisième mode de réalisation de l'invention, illustré à la figure 3a, un ressort hélicoïdal 10 précontraint en compression est disposé entre le fond du bouchon 3 et le flotteur 2, ce flotteur 2 étant ainsi sollicité vers sa position de repos, en butée contre la paroi supérieure du corps creux 1 au niveau de l'orifice d'entrée 5, par une force de rappel comprenant à la fois la force d'Archimède exercée sur le flotteur 2 par le fluide, et la force élastique exercée sur le flotteur 2 par le ressort 10.

De préférence, la force élastique exercée par le ressort 10 sur le flotteur 2 est dimensionnée pour compenser seulement le poids du flotteur 2, le ressort 10 servant uniquement à favoriser la remontée du flotteur 2 lorsque le fluide coule en partie basse du corps creux 1. Cet agencement, qui permet aisément de vaincre les frottements visqueux, est plus particulièrement adapté au cas où le fluide à distribuer présente une viscosité élevée.

La figure 3b illustre une variante du mode de réalisation de la figure 3a, susceptible d'être mise en oeuvre dans le cas illustré à la figure 3a et dans lequel le flotteur 2 présente une partie supérieure de forme tronconique. Selon cette variante, la partie supérieure du flotteur 2 comporte plusieurs encoches circulaires 13 taillées sur toute la hauteur cylindrique du flotteur 2, de telle sorte que le fluide puisse s'écouler du flacon 8 vers la chambre 100 lorsque le flotteur 2 est dans sa position de repos. Néanmoins, ces encoches 13 sont dimensionnées de façon telle que le flotteur 2 reste capable d'obturer le siège d'étanchéité 30 dès qu'il atteint sa position extrême. À cet effet, le diamètre minimum de la surface cylindrique du flotteur 2, aux endroits les plus creusés par les encoches 13, est supérieur au diamètre de la surface intérieure du bouchon 3. En outre, comme précédemment, l'aire de la section annulaire définie entre le flotteur 2 et l'intérieur du corps creux 1 reste inférieure à l'aire de l'orifice 6 de sortie de la chambre 100, pratiqué dans le bouchon 3.

La figure 4 représente un exemple ne faisant pas partie de l'invention d'un dispositif doseur exempt de bouchon et dans lequel le corps creux 1 est inséré à force dans le goulot 80 du flacon souple contenant le fluide jusqu'à ce qu'une butée 9 du corps creux s'appuie sur le goulot 80. En raison de l'absence de bouchon, l'orifice 6 de sortie de la chambre 100 est directement pratiqué dans la base du corps creux 1. Le siège d'étanchéité 30 est alors directement formé par le bord de l'orifice 6, sur lequel l'obturateur 2 vient s'appliquer de façon étanche dans sa position extrême. La partie haute du corps creux cylindrique 1 est entièrement ouverte. Une languette semi-rigide 11, par exemple formée d'une seule pièce avec la partie haute de la paroi du corps creux 1, recouvre l'ouverture supérieure de ce corps 1 de telle sorte que le flotteur 2, une fois inséré sous la languette semi-rigide 11, reste emprisonné dans le corps creux 1 malgré l'action des pressions différentielles exercées dans le fluide lors de l'utilisation du flacon souple. En d'autres termes, l'insertion du flotteur 2 sous la languette semi-rigide 11, ou le retrait de ce flotteur, ne peuvent être obtenus qu'en appliquant à la languette 11 une déformation supérieure à celle que subit cette languette dans l'utilisation normale du dispositif de dosage de l'invention.

Lorsque le flacon 8 est en position de repos, goulot 80 vers le bas, le fluide contenu dans ce flacon 8 coule par gravité jusqu'à remplir la chambre 100 délimitée par le corps creux 1, de sorte que le flotteur est ramené dans sa position de repos, par la poussée d'Archimède, en butée contre la languette 11.

Une pression exercée sur le flacon 8 entraîne le fluide contenu dans ce dernier vers le goulot 80. Le fluide en mouvement exerce une pression sur le flotteur 2, qui se déplace vers le bas en chassant, par l'orifice de sortie 6, le fluide contenu dans la chambre 100. Une fois que le flotteur 2 est en appui sur le siège 30 entourant l'orifice de sortie 6, cet orifice est obturé et l'écoulement de fluide hors de la chambre 100 et vers l'espace aval E2 est interrompu. Le relâchement de la pression sur la surface du flacon 8 produit une dépression qui a pour effet de faire rentrer de l'air dans le corps creux 1, ramenant le flacon à son état de repos. Grâce au jeu annulaire entre le flotteur 2 et la paroi intérieure du corps creux cylindrique 1, le fluide s'écoule à nouveau dans la chambre 100 par gravité et passe sous le flotteur 2, de sorte que la force d'Archimède exercée sur ce flotteur 2 le ramène progressivement dans sa position de repos, en butée sur la languette semi-rigide 11.

Le matériau semi-rigide constitutif de la languette 11 est choisi suffisamment souple pour pouvoir subir sans casser la déformation nécessaire à l'insertion en force du flotteur 2 dans le corps creux 1, mais suffisamment rigide pour ne pas subir, sous l'effet de la force d'Archimède exercée sur le flotteur 2, de déformation qui permettrait à ce flotteur de s'échapper du corps creux à partir de sa position de repos dans laquelle il s'appuie sur cette languette. L'exemple de la figure 4 permet de fabriquer le dispositif doseur en deux pièces moulées, à savoir le corps principal 1 et la languette 11 d'une part, et le flotteur 2 d'autre part.

Les figures 5a et 5b illustrent une variante de réalisation notamment applicable au mode de réalisation de la figure 4 et particulièrement adapté au cas où le fluide à doser présente une viscosité relativement faible.

Selon cette variante, la sortie de la chambre 6 est percée dans une paroi élastiquement déformable et présente une section de passage croissant de façon réversible sous l'effet de la pression du fluide.

En l'occurrence, le fond 12 du corps creux, dans lequel est formé l'orifice d'écoulement 6 constituant la sortie de la chambre 100, est réalisé dans un matériau élastiquement déformable présentant une découpe cruciforme, et l'obturateur 2 présente une forme cylindrique.

Lorsque la pression exercée sur le flacon souple 8 fait descendre le flotteur 2 en butée vers sa position basse extrême sur le siège 30, la poussée exercée par le fluide mis en mouvement en même temps que le flotteur 2 exerce sur le fond 12 une pression qui déforme chacune des parties de la découpe cruciforme, de sorte que l'aire de la sortie 6 de la chambre 100 augmente de façon réversible selon une fonction croissante de cette pression.

Une fois arrivé en butée en partie basse dans sa position extrême, le flotteur 2 obture la sortie 6 et empêche tout écoulement de fluide. Sans pression extérieure, la seule force engendrée par la hauteur de fluide dans le flacon ne peut vaincre l'élasticité des lamelles souples formées aux coins de la sortie cruciforme 6 de la chambre 100, le fluide étant donc retenu dans le dispositif doseur.

La section de passage du fond 12 à l'état repos ne permet pas l'écoulement de fluide venant du flacon mais permet, après relâchement de la pression sur le flacon, de faire rentrer l'air dans celui-ci pour permettre au flacon de retrouver sa position initiale.

Les figures 6a à 10d illustrent des exemples ne faisant pas partie de l'invention, dans lesquelles l'obturateur 2 présente une densité a priori quelconque et en tout cas non nécessairement inférieure à celle du fluide, cet obturateur étant sollicité vers sa position de repos par une force de rappel de nature seulement élastique.

Dans l'exemple des figures 6a à 6d, l'obturateur 2 est constitué par un diaphragme mobile en translation par rapport au corps creux 1, ce diaphragme étant relié au corps creux 1 par deux languettes élastiques 21 diamétralement opposées l'une à l'autre, et la force élastique de rappel de l'obturateur étant exercée par ces languettes 21.

Dans cet exemple, le corps creux 1, l'obturateur 2 et chacune des languettes élastiques 21 sont de préférence réalisés d'une seule pièce en un matériau élastique.

Le siège d'étanchéité 30, sur lequel s'appuie l'obturateur 2 dans sa position extrême, est formé sur la partie haute du corps creux 1 et entoure un passage de fluide disposé entre l'espace amont E1 et l'espace aval E2 et formant l'entrée 5 de la chambre 100.

Au repos, l'obturateur 2 occupe la position illustrée aux figures 6a et 6b.

Lorsque le fluide dans l'espace amont E1 subit une pression qui le pousse vers la sortie 6, l'énergie cinétique communiquée au fluide exerce sur l'obturateur 2 une force de traînée qui le sollicite vers sa position extrême illustrée à la figure 6c, l'amplitude Fx de cette force de traînée répondant à l'équation :

$$Fx = \rho.S.V^2.Cx / 2,$$

où $\rho$ représente la densité du fluide;
où S représente le maître-couple de l'obturateur 2;
où V est la vitesse du fluide; et
où Cx représente le coefficient de traînée, lié à la forme de l'obturateur.

Comme dans les modes de réalisation précédents, le fluide qui traverse le corps creux 1 sous l'effet d'une augmentation de la pression à l'entrée 5 de la chambre 100 entraîne l'obturateur 2 de sa position de repos (figure 6a) jusque dans sa position extrême (figure 6c), et le volume de fluide distribué entre l'instant où l'obturateur 2 quitte sa position de repos et l'instant où cet obturateur 2 atteint sa position extrême est égal au volume de fluide dont l'écoulement est nécessaire pour opérer ce déplacement de l'obturateur 2.

L'exemple des figures 7a et 7b ne se distingue de l'exemple des figures 6a à 6d que par le fait que l'obturateur 2 est rattaché au corps creux 1 par une seule languette élastique 21, cet obturateur étant représenté dans sa position de repos en pointillés sur la figure 7a et dans sa position extrême sur la figure 7b.

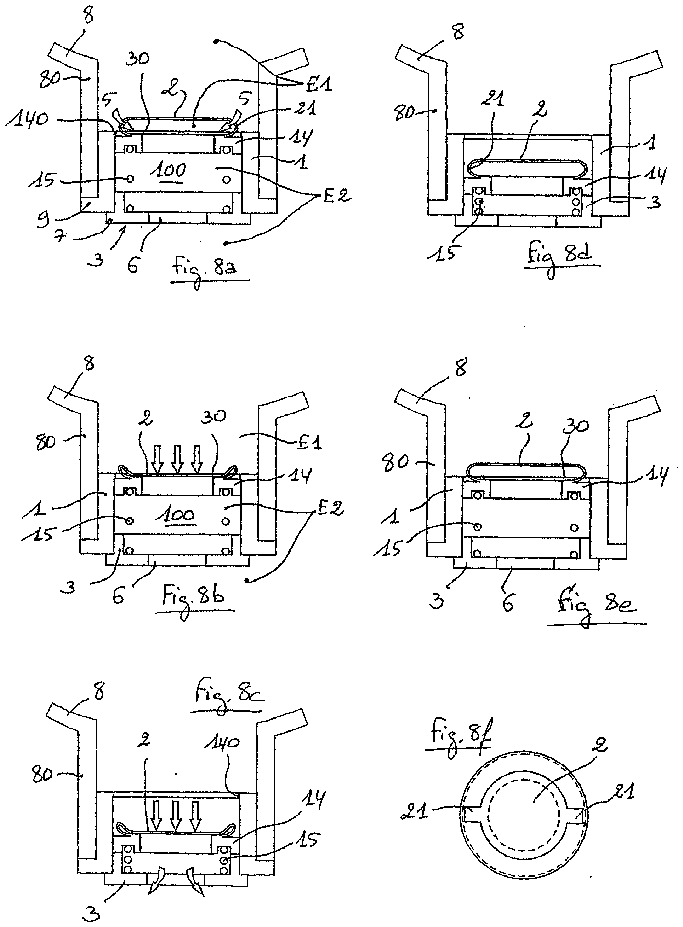

L'exemple des figures 8a à 8f utilise le même obturateur 2 que l'exemple des figures 6a à 6d, ainsi qu'un bouchon 3 inséré dans le corps creux 1 et portant l'orifice de sortie 6, comme c'est le cas dans les modes de réalisation des figures 1, 2 et 3a notamment.

En revanche, L'exemple des figures 8a à 8f comprend en outre un piston 14 et un ressort 15.

Le piston 14 est monté coulissant dans le corps creux 1 et l'obturateur 2 est porté par le piston 14 au moyen de deux languettes élastiques 21 de la même manière qu'il était porté par le corps creux 1 dans l'exemple des figures 6a à 6d.

Le piston 14 présente une forme essentiellement annulaire (figure 8f) définissant un siège d'étanchéité 30 autour d'un passage de fluide qui constitue l'entrée 5 de la chambre 100 et qui permet une communication sélective entre l'espace amont E1 et l'espace aval E2.

Le ressort 15 est quant à lui précontraint en compression et disposé entre le bouchon 3 et le piston 14, de sorte qu'il tend à donner à la chambre 100 un volume maximal.

Une butée 140 est formée sur la périphérie interne du corps creux 1 pour limiter la course du piston 14 vers le haut en définissant une position haute maximale de ce piston dans le corps creux 1.

Le fonctionnement du dispositif doseur cet exemple est illustré de façon séquentielle et chronologique sur les figures 8a à 8e.

La figure 8a illustre ce dispositif dans sa configuration stable de repos, dans laquelle la sortie 6 de la chambre 100 communique avec l'entrée 5 de cette chambre.

L'élévation de la pression dans le flacon 8 provoque le déplacement de l'obturateur 2 vers sa position extrême illustrée à la figure 8b, et dans laquelle cet obturateur obture l'entrée 5 de la chambre 100 en s'appliquant sur le siège du clapet 30.

Dans la mesure où la pression du fluide s'exerce alors sur toute la surface du piston 14 fermé par l'obturateur 2, ce piston se déplace vers le bas en réduisant le volume de la chambre 100, en provoquant l'expulsion, à travers la sortie 6, du fluide contenu dans cette chambre, et en comprimant corrélativement le ressort 15, ce mouvement étant interrompu lorsque le piston 14 vient en appui sur le bouchon 3 (figure 8c).

Après relâchement de la pression du fluide dans le flacon 8, la force élastique de rappel exercée par les languettes 21 ramène l'obturateur 2 dans sa position de repos (figure 8d), autorisant ainsi le fluide contenu dans le flacon 8 à s'écouler dans la chambre 100 par gravité.

Grâce au ressort 15, qui sollicite le piston 14 vers le haut, et au fluide qui s'écoule dans la chambre 100, cette dernière reprend son volume maximal initial (figure 8e), le dispositif doseur retournant ainsi à sa configuration stable initiale de repos.

Grâce à son agencement, l'exemple des figures 8a à 8f permet donc de distribuer un volume de fluide comprenant, en plus du volume de fluide distribué pendant que l'obturateur passe de sa position de repos à sa position extrême, un volume de fluide supplémentaire très exactement égal à la différence entre le volume maximal de la chambre 100, illustré aux figures 8a et 8e, et le volume minimal de cette chambre, illustré à la figure 8c.

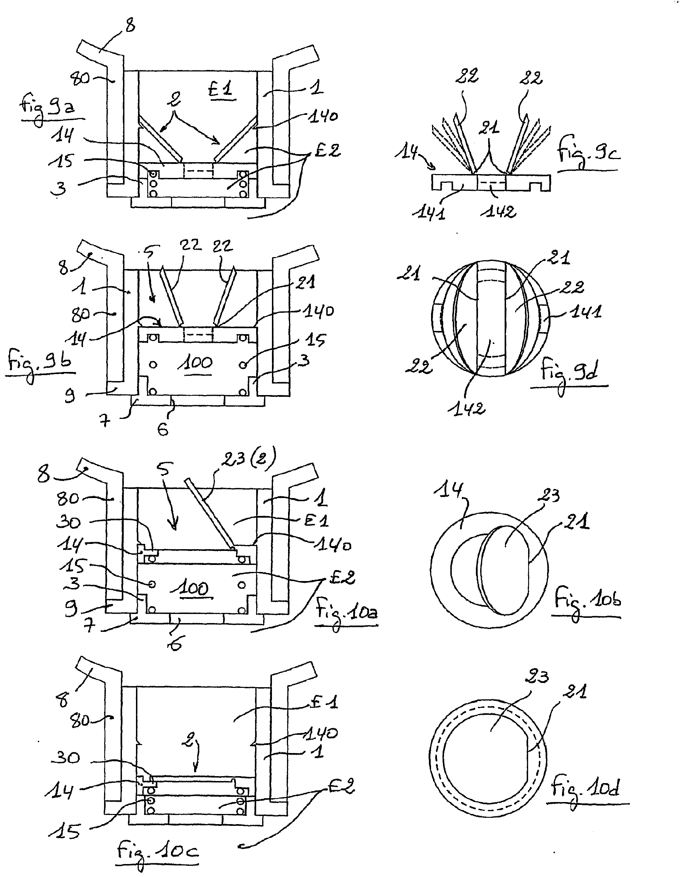

Les figures 9a à 9d d'une part, et 10a à 10d d'autre part, illustrent respectivement deux exemples exploitant également le principe d'une chambre 100 fermée par un piston 14 sollicité par un ressort 15.

En outre, dans ces deux cas, la chambre est partiellement délimitée par un bouchon 3 inséré dans le corps creux 1, et ce dernier comporte une butée périphérique interne 140 permettant de limiter la course du piston 14 vers le haut.

Dans l'exemple des figures 9a à 9d, le piston 14 comprend essentiellement deux poutres mutuellement transversales 141 et 142, notamment visibles sur le figure 9d, et l'obturateur 2 est formé de deux volets 22 articulés sur la poutre 142 au moyen de languettes élastiques respectives 21 formant charnières, ces volets 22 étant symétriques l'un de l'autre par rapport au plan médian de la poutre 142 et du corps cylindrique creux 1.

De préférence, le piston 14, chacun des volets 22 formant l'obturateur 2, et chacune des languettes élastiques 21 formant charnières sont réalisés d'une seule pièce en un matériau élastique.

L'exemple des figures 9a à 9d se distingue de l'ensemble des autres exemples et de réalisation présentés par le fait que l'obturateur 2, dans sa position extrême telle que représentée à la figure 9a, isole l'un de l'autre les espaces amont E1 et aval E2 non pas en s'appuyant de façon fixe sur un siège d'étanchéité, mais grâce à un appui glissant du bord de chacun des volets 22 sur la paroi cylindrique interne du corps creux 1.

Dans l'exemple des figures 10a à 10d, l'obturateur 2 est formé d'un volet unique 23, articulé sur le piston 14 au moyen d'une unique languette élastique 21.

En fait, l'exemple des figures 10a à 10d se distingue essentiellement de l'exemple des figures 8a à 8f par le fait que l'obturateur 2 est constitué par un volet 23 mobile en rotation et non par un diaphragme mobile en translation.

De préférence, le piston 14, le volet 23 formant l'obturateur 2, et la languette élastique 21 formant charnière sont réalisés d'une seule pièce en un matériau élastique.

Comme dans l'exemple des figures 8a à 8f, le piston 14 de l'exemple des figures 10a à 10d présente une forme essentiellement annulaire définissant un siège d'étanchéité 30 autour d'un passage de fluide qui constitue l'entrée 5 de la chambre 100 et qui permet une communication sélective entre l'espace amont E1 et l'espace aval E2.

**Revendications**

1. Dispositif doseur attachable à un contenant adapté pour recevoir un fluide pour transférer, depuis un espace amont (E1) vers un espace aval (E2), un volume prédéterminé du fluide en réponse à une élévation de pression de ce fluide dans l'espace amont (E1), ce dispositif comprenant

   au moins un corps creux (1) délimitant au moins partiellement une chambre (100) dotée d'une entrée (5) et d'une sortie (6), un obturateur flottable (2) et un siège d'étanchéité (30) défini au-dessus d'un membre creux lorsque le dispositif est orienté dans une position d'utilisation dans laquelle la sortie (6) est plus basse que l'entrée (5) de la chambre (100), et entourant un passage positionné entre l'espace amont (E1) et l'espace aval (E2), l'obturateur flottable (2) étant mobile par rapport au corps creux (1) entre une position de repos, vers laquelle cet obturateur flottable (2) est sollicité par une force de rappel comprenant au moins partiellement la flottabilité lorsque le dispositif est orienté dans ladite position d'utilisation dans laquelle la sortie (6) est plus basse que l'entrée (5) de la chambre (100), et une position extrême, qui est distante de la position de repos et vers laquelle cet obturateur flottable (2) est sélectivement entrainé par le fluide circulant de l'espace amont (E1) vers l'espace aval (E2) à cause de l'élévation de pression du fluide lorsque le dispositif est orienté dans ladite position d'utilisation, et dans laquelle l'obturateur flottable (2) repose sur le siège d'étanchéité (30), l'espace amont (E1) s'étendant au moins à l'extérieur de la chambre (100) du côté de son entrée (5), et l'espace aval (E2) s'étendant au moins à l'extérieur du dispositif et de la chambre (100) du côté de sa sortie (6),

où l'obturateur flottable (2) isole l'un de l'autre l'espace amont (E1) et l'espace aval (E2) dans sa position extrême et seulement dans cette position, et où la sortie (6) de la chambre (100) communique avec l'espace amont (E1) pour toute position de l'obturateur (2) flottable autre que sa position extrême, et où, une fois que l'élévation de pression est relâchée, de l'air entre dans le contenant par la sortie (6) de la chambre (100).

2. Dispositif doseur suivant la revendication 1, **caractérisé en ce que** le corps creux est adapté à être attachable substantiellement hermétiquement au goulot (80) du contenant.

3. Dispositif doseur suivant la revendication 1, **caractérisé en ce qu'**il comprend un ressort sollicitant l'obturateur flottable (2) dans sa position de repos.

4. Dispositif doseur suivant la revendication 3 , **caractérisé en ce que** le ressort est précontraint en compression.

5. Dispositif doseur suivant la revendication 3, **caractérisé en ce que** le ressort est choisi de telle sorte qu'une force élastique exercée sur l'obturateur flottable (2) par le ressort compense substantiellement le poids de l'obturateur flottable (2).

6. Dispositif doseur suivant la revendication 1, **caractérisé en ce que** l'obturateur flottable (2) comprend un flotteur cylindrique à tête tronconique.

7. Dispositif doseur suivant la revendication 1, **caractérisé en ce que** l'obturateur flottable (2) comprend un flotteur sphérique.

8. Dispositif doseur suivant l'une quelconque des revendications précédentes, **caractérisé en ce que** la sortie (6) de la chambre (100) est percée dans une paroi élastiquement déformable sous l'effet de la pression du fluide.

9. Dispositif doseur suivant la revendication 2, **caractérisé en ce que** le contenant délimite un espace amont (E1) ayant un volume variable et que l'élévation de pression est obtenue en réduisant le volume de l'espace amont (E1).

10. Dispositif doseur suivant la revendication 1, **caractérisé en ce que** le contenant est flexible et que l'élévation de pression est obtenue en exerçant une pression sur le contenant.

11. Dispositif doseur suivant la revendication 1, **caractérisé en ce que** le contenant comprend des parois rigides et qu'un piston est utilisé pour créer l'élévation de pression du fluide.

12. Dispositif doseur suivant la revendication 1, **caractérisé en ce que** l'obturateur flottable est creux.

13. Dispositif doseur suivant la revendication 1, **caractérisé en ce que** l'obturateur flottable a une forme sphérique.

14. Dispositif doseur suivant la revendication 1, **caractérisé en ce que** l'obturateur flottable présente une partie supérieure de forme tronconique.

15. Dispositif doseur suivant la revendication 1, **caractérisé en ce que** l'obturateur flottable a une forme cylindrique.


**Patentansprüche**

1. Dosiervorrichtung, die an einem Behälter angebracht werden kann, der dazu geeignet ist, ein Fluid aufzunehmen, um in Reaktion auf einen Druckanstieg dieses Fluids in dem stromaufwärtigen Raum (E1) ein vorbestimmtes Volumen des Fluids von einem stromaufwärtigen Raum (E1) in einen stromabwärtigen Raum (E2) zu überführen, wobei die Vorrichtung enthält:

zumindest einen Hohlkörper (1) der zumindest teilweise eine Kammer (100) begrenzt, einen schwimmfähigen Verschluss (2) und einen Dichtsitz (30), der oberhalb eines Hohlglieds definiert ist, wenn die Vorrichtung in einer Gebrauchsstellung ausgerichtet ist, in welcher der Auslass (6) niedriger liegt als der Einlass (5) der Kammer (100), und der einen Durchgang umgibt, der zwischen dem stromaufwärtigen Raum (E1) und dem stromabwärtigen Raum (E2) positioniert ist, die mit einem Einlass (5) und einem Auslass (6) versehen ist, wobei der schwimmfähige Verschluss (2) relativ zu dem Hohlkörper (1) zwischen einer Ruhestellung, in welcher dieser schwimmfähige Verschluss (2) mit einer Rückstellkraft beaufschlagt ist, die zumindest teilweise den Auftrieb sicherstellt, wenn die Vorrichtung in der Gebrauchsstellung ausgerichtet ist, in welcher der Auslass (6) niedriger liegt als der Einlass (5) der Kammer (100), und einer Endstellung verstellbar ist, die von der Ruhestellung entfernt liegt und in welche der schwimmfähige Verschluss (2) selektiv durch das Fluid mitgenommen wird, das aufgrund des Druckanstiegs des Fluids von dem stromaufwärtigen Raum (E1) zum stromabwärtigen Raum (E2) strömt, wenn die Vorrichtung in der Gebrauchsstellung ausgerichtet ist, und in welcher der schwimmfähige Verschluss (2) an dem Dichtsitz (30) aufliegt, wobei der stromaufwärtige Raum (E1) sich zumindest außerhalb der Kammer (100) auf der Seite ihres Einlasses (5) erstreckt und der stromabwärtige Raum (E2) sich zumindest außerhalb der Vorrichtung und der Kammer (100) auf der Seite ihres Auslasses (6) erstreckt, wobei der schwimmfähige Verschluss (2) in seiner Endstellung und nur in dieser Stellung den stromaufwärtigen Raum (E1) und den stromabwärtigen Raum (E2) voneinander trennt, und wobei der Auslass (6) der Kammer (100) mit dem stromaufwärtigen Raum (E1) bei jeder anderen Stellung des schwimmfähigen Verschlusses (2) außer seiner Endstellung kommuniziert, und wobei nach Entspannung des Druckanstiegs Luft über den Auslass (6) der Kammer (100) in den Behälter einströmt.

2. Dosiervorrichtung nach Anspruch 1,
**dadurch gekennzeichnet, dass**
der Hohlkörper dazu ausgelegt ist, im Wesentlichen hermetisch dicht an den Hals (80) des Behälters angeordnet werden zu können.

3. Dosiervorrichtung nach Anspruch 1,
**dadurch gekennzeichnet, dass**
sie eine Feder enthält, die den schwimmfähigen Verschluss (2) in seine Ruhestellung beaufschlägt.

4. Dosiervorrichtung nach Anspruch 3,
**dadurch gekennzeichnet, dass**
die Feder auf Druck vorgespannt ist.

5. Dosiervorrichtung nach Anspruch 3,
**dadurch gekennzeichnet, dass**
die Feder so gewählt ist, dass eine elastische Kraft, die von der Feder auf den schwimmfähigen Verschluss (2) ausgeübt wird, im Wesentlichen die Gewichtskraft des schwimmfähigen Verschlusses (2) ausgleicht.

6. Dosiervorrichtung nach Anspruch 1,
**dadurch gekennzeichnet, dass**
der schwimmfähige Verschluss (2) einen zylindrischen Schwimmer mit kegelstumpfförmigem Kopf aufweist.

7. Dosiervorrichtung nach Anspruch 1,
**dadurch gekennzeichnet, dass**
der schwimmfähige Verschluss (2) einen sphärischen Schwimmer aufweist.

8. Dosiervorrichtung nach einem der vorangehenden Ansprüche,
**dadurch gekennzeichnet, dass**
der Auslass (6) der Kammer (100) in eine Wand eingebracht ist, die unter der Wirkung von dem Druck des Fluids elastisch verformbar ist.

9. Dosiervorrichtung nach Anspruch 2,
**dadurch gekennzeichnet, dass**
der Behälter einen stromaufwärtigen Raum (E1) mit veränderlichem Volumen eingrenzt und dass der Druckanstieg unter Verminderung des Volumens des stromaufwärtigen Raums (E1) erhalten wird.

10. Dosiervorrichtung nach Anspruch 1,
**dadurch gekennzeichnet, dass**
der Behälter flexibel ist und dass der Druckanstieg dadurch erhalten wird, dass ein Druck auf den Behälter ausgeübt wird.

11. Dosiervorrichtung nach Anspruch 1,
**dadurch gekennzeichnet, dass**
der Behälter starre Wände enthält und dass ein Kolben Verwendung findet, um den Druckanstieg des Fluids zu bewirken.

12. Dosiervorrichtung nach Anspruch 1,
**dadurch gekennzeichnet, dass**
der schwimmfähige Verschluss hohl ausgeführt ist.

13. Dosiervorrichtung nach Anspruch 1,
**dadurch gekennzeichnet, dass**
der schwimmfähige Verschluss eine sphärische Form hat.

14. Dosiervorrichtung nach Anspruch 1,
**dadurch gekennzeichnet, dass**
der schwimmfähige Verschluss einen kegelstumpfförmigen oberen Abschnitt aufweist.

**15.** Dosiervorrichtung nach Anspruch 1, **dadurch gekennzeichnet, dass** der schwimmfähige Verschluss eine zylindrische Form hat.

## Claims

**1.** Metering device capable of being secured to a container suitable for receiving a fluid, in order to transfer, from an upstream space (E1) to a downstream space (E2), a predetermined volume of the fluid in response to a rise in pressure of said fluid in the upstream space (E1), said device comprising at least one hollow body (1) delimiting at least partially a chamber (100) provided with an inlet (5) and an outlet (6), a buoyant valve (2), and a sealing seat (30) defined above a hollow member when the device is oriented in a position of use wherein the outlet (6) is lower than the inlet (5) of the chamber (100), and surrounding a passage positioned between the upstream space (E1) and the downstream space (E2), the buoyant valve (2) being capable of moving relative to the hollow body (1) between a rest position, towards which said buoyant valve (2) is stressed by a return force, at least partially comprising buoyancy, when the device is oriented in said position of use wherein the outlet (6) is lower than the inlet (5) of the chamber (100), and an end position, which is remote from the rest position and towards which said buoyant valve (2) is selectively driven by the fluid flowing from the upstream space (E1) to the downstream space (E2) as a result of the rise in pressure of the fluid when the device is oriented in said position of use, and wherein the buoyant valve (2) is at rest on the sealing seat (30), the upstream space (E1) extending at least outside the chamber (100) on the inlet (5) side thereof, and the downstream space (E2) extending at least outside the device and the chamber (100) on the outlet (6) side thereof, whereby the buoyant valve (2) isolates the upstream space (E1) from the downstream space (E2) in the end position thereof and only in this position, and whereby the outlet (6) of the chamber (100) communicates with the upstream space (E1) for all positions of the buoyant valve (2) except for the end position thereof, and whereby, once the rise in pressure is released, air enters the container via the outlet (6) of the chamber (100).

**2.** Metering device according to claim 1, **characterised in that** the hollow body is suitable for being secured in a substantially hermetically-sealed manner to the neck (80) of the container.

**3.** Metering device according to claim 1, **characterised in that** it comprises a spring stressing the buoyant valve (2) in the rest position thereof.

**4.** Metering device according to claim 3, **characterised in that** the spring is prestressed under a compressive force.

**5.** Metering device according to claim 3, **characterised in that** the spring is selected such that a resilient force exerted on the buoyant valve (2) by the spring substantially compensates for the weight of the buoyant valve (2).

**6.** Metering device according to claim 1, **characterised in that** the buoyant valve (2) comprises a cylindrical float having a frustoconical head.

**7.** Metering device according to claim 1, **characterised in that** the buoyant valve (2) comprises a spherical float.

**8.** Metering device according to any of the previous claims, **characterised in that** the outlet (6) of the chamber (100) is pierced in an elastically-deformable wall under the effect of the fluid pressure.

**9.** Metering device according to claim 2, **characterised in that** the container delimits an upstream space (E1), the volume whereof is variable, and **in that** the rise in pressure is obtained by reducing the volume of the upstream space (E1).

**10.** Metering device according to claim 1, **characterised in that** the container is flexible and **in that** the rise in pressure is obtained by exerting pressure on the container.

**11.** Metering device according to claim 1, **characterised in that** the container comprises rigid walls and **in that** a piston is used to create the rise in pressure of the fluid.

**12.** Metering device according to claim 1, **characterised in that** the buoyant valve is hollow.

**13.** Metering device according to claim 1, **characterised in that** the buoyant valve is spherical.

**14.** Metering device according to claim 1, **characterised in that** the buoyant valve has a frustoconical-shaped upper portion.

**15.** Metering device according to claim 1, **characterised in that** the buoyant valve is cylindrical.

FIG.1

FIG.2

FIG.3a

FIG.3b

FIG.4

FIG.5a

FIG.5b

Fig. 6a

Fig. 6b

Fig. 6c

Fig. 6d

Fig. 7a

Fig. 7b

Fig. 8a

Fig. 8b

fig. 8c

fig 8d

fig 8e

fig. 8f

fig 9a

fig. 9b

fig. 10a

fig. 10c

fig. 9c

fig. 9d

fig. 10b

fig. 10d

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9906802 A
- EP 0995976 A

- US 4582230 A